# FASCICULE DE BREVET EUROPEEN

(11) **EP 2 387 684 B1**
(45) Date de publication et mention de la délivrance du brevet: **23.12.2015**
(21) Numéro de dépôt: 10703306.0
(22) Date de dépôt: 07.01.2010
(51) Int. Cl.: F16L 17/06, F16L 17/00

(54) **ELEMENT D'UN CIRCUIT DE TRANSPORT DE FLUIDE A JOINT D'ETANCHEITE MOBILE**
ELEMENT IN EINEM FLÜSSIGKEITSTRANSPORTKREISLAUF MIT MOBILER DICHTUNG
MEMBER IN A FLUID TRANSPORT CIRCUIT WITH MOBILE SEAL

(30) Priorité: 13.01.2009 FR 0900123
(43) Date de publication de la demande: 23.11.2011
(73) Titulaire: PARKER HANNIFIN MANUFACTURING France SAS, 74100 Ville-la-Grand (FR)
(72) Inventeur: LE QUERE, Philippe, F-35830 Betton (FR)
(74) Mandataire: Lavialle, Bruno François Stéphane
(86) Numéro de dépôt international: PCT/FR2010/000005
(87) Numéro de publication internationale: WO 2010/081958

(56) Documents cités:
- WO-A-98/19094
- FR-A- 1 086 073
- GB-A- 1 211 238
- US-A- 4 886 303
- US-B1- 6 481 762

## Description

La présente invention concerne un élément d'un circuit de transport de fluide. L'élément est par exemple : une union permettant de raccorder deux canalisations l'une à l'autre, un embout ou un raccord permettant de connecter une canalisation à un organe émetteur ou récepteur de fluide implanté dans le circuit de transport de fluide. Ledit organe est par exemple un distributeur, un actionneur, un régulateur de débit ou de pression...

### ARRIERE PLAN DE L'INVENTION

On connaît des éléments de transport de fluide tels que des raccords comprenant un corps pourvu extérieurement d'un épaulement annulaire en saillie duquel s'étend une portion insérable dans un canal d'un organe auquel l'élément est destiné à être raccordé. Une gorge comportant un fond bordé par des flancs externe et interne est ménagée dans l'épaulement pour recevoir un joint annulaire d'étanchéité destiné à être appliqué contre une surface bordant un orifice d'entrée du canal de l'organe.

A l'opposé de la portion insérable, le corps comporte une portion destinée à saillir à l'extérieur de l'organe et pourvue de moyens de réception et d'assujettissement étanche d'une portion d'extrémité d'une canalisation.

Lorsque l'élément est correctement monté sur l'organe, le joint d'étanchéité est comprimé entre la surface bordant l'orifice d'entrée du canal et le fond de la gorge de sorte que le joint est en contact avec ladite surface et avec le fond de la gorge empêchant ainsi une fuite du fluide. Toutefois, lorsque l'élément est incorrectement monté sur l'organe ou lorsqu'il a subi un recul du fait de la mise sous pression du circuit dans lequel il est implanté, le joint d'étanchéité n'est plus suffisamment comprimé entre la surface bordant l'orifice d'entrée du canal et le fond de la gorge, laissant ainsi fuir le fluide.

US 4 886 303 A1 illustre l'état de la technique dans le domaine de l'invention.

### OBJET DE L'INVENTION

Un but de l'invention est de fournir un moyen permettant une meilleure tolérance aux variations de positionnement axial d'un tel élément par rapport à l'organe sur lequel il est implanté.

### RESUME DE L'INVENTION

A cet effet, on prévoit, selon l'invention, un circuit de transport de fluide, comprenant un corps tubulaire pourvu extérieurement d'un épaulement annulaire dans lequel est ménagée une gorge comportant un fond bordé par des flancs externe et interne pour recevoir un joint annulaire d'étanchéité destiné à prendre appui contre une surface bordant un orifice d'un canal d'un organe auquel l'élément est destiné à être raccordé. Le corps délimite au moins un passage pour amener le fluide dans la gorge de manière à repousser le joint d'étanchéité contre la surface externe de la gorge et contre la surface bordant l'orifice du canal.

Ainsi, la pression du fluide va plaquer le joint d'étanchéité contre le flanc externe de la gorge et la surface bordant l'orifice du canal pour assurer l'étanchéité du raccordement. L'étanchéité peut être de la sorte assurée en s'accommodant d'une variation de la distance séparant la surface bordant l'orifice d'entrée du canal et le fond de la gorge.

De préférence, le passage comprend un conduit qui débouche sur le flanc interne de la gorgé et, avantageusement, le conduit débouche également sur le fond de la gorge.

Le fluide sous pression peut alors facilement atteindre la majeure partie de la surface du joint orientée vers le fond et le flanc interne de la gorge pour plaquer le joint d'étanchéité contre le flan externe et la surface bordant l'orifice du canal.

De préférence encore, l'élément comportant en saillie de l'épaulement une portion insérable dans le canal, le passage comprend au moins une rainure s'étendant sur au moins une partie de la portion insérable, du flanc interne et du fond de la gorge.

Le passage peut alors être réalisé de manière simple notamment par un fraisage ou en étant obtenu directement par moulage.

Selon un mode réalisation particulier, le joint d'étanchéité possède en regard du fond de la gorge une surface pourvue d'au moins deux saillies maintenant ladite surface écartée du fond de la gorge et, de préférence, le joint comporte plus de deux saillies réparties de façon symétrique.

Les saillies permettent au fluide d'exercer une pression sur ladite surface du joint pour appliquer le joint contre la surface bordant l'orifice du canal de l'organe plus particulièrement lorsque le fond de la gorge est plan.

Selon une caractéristique particulière, le joint d'étanchéité comporte une lèvre annulaire s'étendant à l'opposé du fond de la gorge et au voisinage du flanc interne de celle-ci.

La lèvre permet de limiter le passage du fluide entre le joint d'étanchéité et la surface de l'organe bordant l'orifice du canal de manière à augmenter la différence de pression entre la surface du joint en regard de la surface bordant l'orifice du canal et la surface du joint en regard du fond de la gorge de manière à faciliter l'application du joint d'étanchéité contre la surface bordant l'orifice du canal.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- la figure 1 est une demi-vue en coupe longitudinale d'un élément conforme à un premier mode de réalisation de l'invention,
- la figure 2 est une vue analogue à la figure 1 dudit élément engagé dans un canal d'un organe auquel il est raccordé,
- les figures 3 et 4 sont des demi-vues en coupe axiale de joints d'étanchéité selon des variantes de réalisation de l'invention,
- la figure 5 est une vue analogue à la figure 2 d'un élément conforme à un deuxième mode de réalisation de l'invention,
- la figure 6 est une vue en perspective du joint d'étanchéité selon une variante du deuxième mode de réalisation,
- la figure 7 est une vue analogue à la figure 1 d'un élément selon une variante de réalisation,

### DESCRIPTION DETAILLEE DE L'INVENTION

L'élément conforme à l'invention est ici un raccord destiné à permettre la connexion d'une extrémité de canalisation à un organe 100 d'un circuit de transport de fluide. Cet organe peut être un organe émetteur ou récepteur de fluide et par exemple un distributeur, un actionneur, un réservoir, un régulateur de pression ou de débit...

L'organe 100 comprend un canal 101 ayant un orifice d'entrée 102 débouchant sur une surface externe 103 de l'organe 100. La portion du canal 101 s'étendant au voisinage de l'orifice d'entrée 102 est ici taraudée.

Le raccord comporte un corps 1, tubulaire, ayant une portion d'extrémité 1.1 pourvue d'une rondelle dentée 2, connue en elle-même, permettant l'ancrage du corps 1 dans la portion du canal 101 voisiné de l'orifice d'entrée 102. Les dents de la rondelle dentée 2 sont agencées pour prendre appui contre le filet de la portion taraudée du canal 101. Le corps 1 possède à l'opposé de la portion d'extrémité 1.1 une portion d'extrémité 1.2 pourvue intérieurement de moyens, généralement désignés en 3, d'assujettissement étanche de l'extrémité de canalisation. Les moyens d'assujettissement étanche 3 sont connus en eux-mêmes et ne sont donc pas décrits ici. Ces moyens peuvent permettre d'assurer une fixation définitive ou au contraire démontable de l'extrémité de canalisation au raccord.

La portion d'extrémité 1.2 est pourvue d'une collerette externe 4 ayant une face formant épaulement 5 tournée du côté de la portion d'extrémité 1.1. Une gorge 6, plane et annulaire, est ménagée coaxialement au corps 1 dans l'épaulement 5 et comporte un fond 6.1 bordé d'un flanc externe 6.2 et d'un flanc interne 6.3 s'étendant dans le prolongement de la surface extérieure du corps 1. Des passages ou conduits 7 s'étendent depuis la gorge 6 jusqu'à la portion d'extrémité 1.1 du corps 1. Ces conduits 7 ont ici la forme d'une rainure qui s'étend axialement sur la surface externe du corps 1, le flanc interne 6.3 puis radialement sur le fond 6.1 de la gorge 6 jusqu'au flanc externe 6.2. La rainure s'ouvre ainsi sur le fond 6.1, du flanc interne 6.3 jusqu'au flanc externe 6.2.

Un joint d'étanchéité 8 est reçu dans la gorge 6. Le joint d'étanchéité 8 est de forme torique et a un diamètre mineur sensiblement égal à la largeur de la gorge 6 et supérieur à la profondeur de la gorge 6. On notera que le fond 6.1 de la gorge 6 se raccorde au flanc interne 6.3 par une surface tronconique 15 tendant à faire saillir lé joint d'étanchéité 8 hors de la gorge 6 du fait de l'élasticité du joint d'étanchéité 8 ; ou tendant à repousser le joint d'étanchéité contre le flanc externe 6.2 lorsque le joint d'étanchéité 8 est déplacé vers le fond 6.1 de la gorge 6.

Le montage du raccord sur l'organe 100 est réalisé en engageant l'extrémité 1.1 du corps 1 dans le canal 101 jusqu'à ce que l'épaulement 5 vienne en butée de la portion de surface externe 103 entourant l'orifice d'entrée 102. Comme le diamètre mineur du joint d'étanchéité 8 (ou la largeur axiale de celui-ci lorsque le joint n'est pas torique) est supérieur à la profondeur de la gorge 6, le joint d'étanchéité 8 est comprimé entre le fond 6.1 de la gorge 6 et la portion de surface externe 103 bordant l'orifice d'entrée 102. Si le corps 1 du raccord recule, par exemple sous l'effet d'un dévissage accidentel ou de la mise sous pression du circuit de fluide, la compression du joint d'étanchéité 8 diminue. Toutefois, le fluide sous pression a rempli la gorge 6 en passant par les conduits 7 et pousse le joint d'étanchéité 8 contre la portion de surface externe 103 bordant l'orifice d'entrée 102 et le flanc externe 6.2 de la gorge 6, assurant ainsi une étanchéité du montage en s'opposant à une fuite du fluide à l'extérieur de la gorge 6.

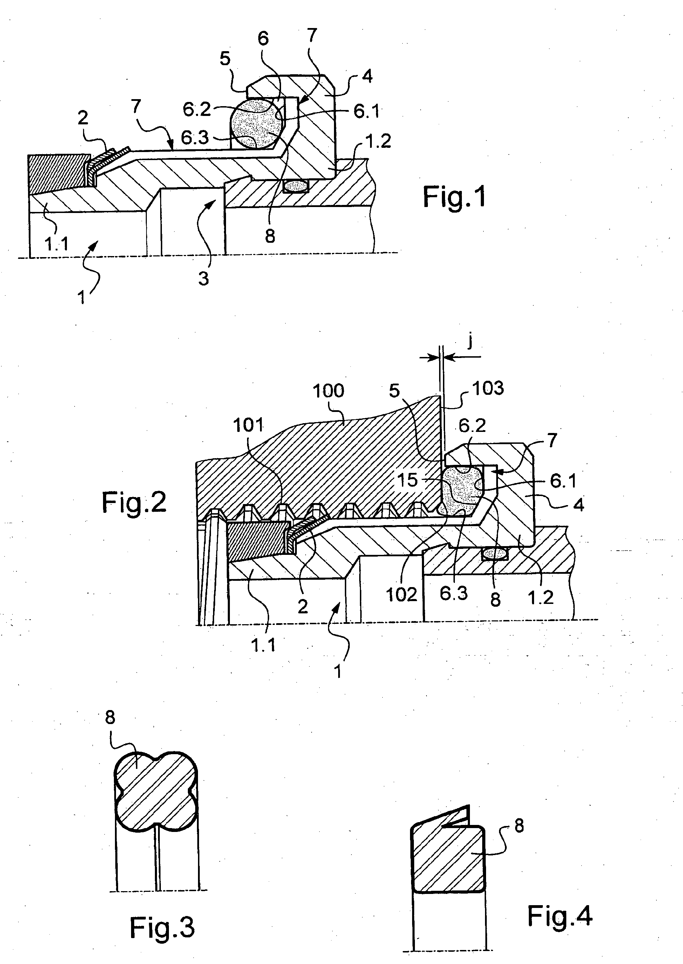

En variante, comme représenté aux figures 3 et 4, le joint d'étanchéité 8 peut avoir une section quadrilobique ou une section rectangulaire. Dans ce dernier cas, le joint d'étanchéité 8 peut comporter au niveau de son pourtour externe une lèvre annulaire destinée à être appliquée contre le flanc externe 6.2 de la gorge 6.

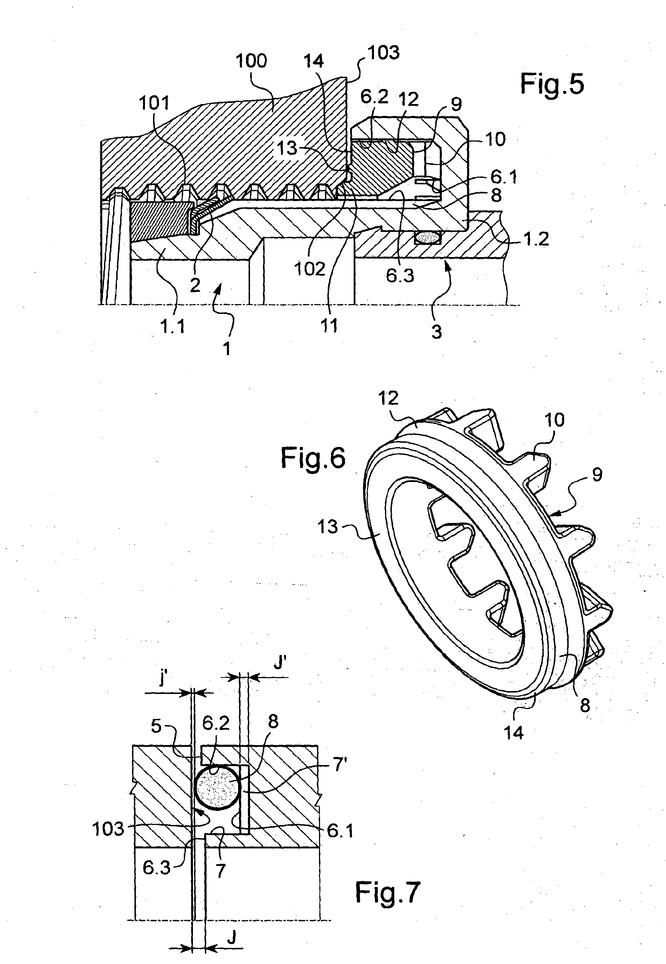

Dans le deuxième mode de réalisation représenté à la figure 5, les conduits 7 sont uniquement formés par des rainures s'étendant axialement sur la surface externe de la portion d'extrémité 1.1 et le flanc interne 6.3 de la gorge 6. Le joint d'étanchéité 8 possède en regard du fond 6.1 de la gorge 6, une surface 9 à partir de laquelle s'étendent axialement des saillies 10, prenant appui contre le fond 6.1 pour maintenir la surface 9 écartée du fond 6.1. Les saillies 10 permettent au fluide de venir en contact de la surface 9 pour pousser le joint d'étanchéité 8 contre la portion de surface externe 103 bordant l'orifice d'entrée 102.

Le joint d'étanchéité 8 comprend en outre une lèvre annulaire 11 s'étendant axialement en saillie de la surface 14 à l'opposé du fond 6.1 de la gorge 6 et au voisinage du flanc interne 6.3 pour pénétrer dans l'orifice d'entrée 102, en étant appliquée contre le bord de celui-ci de manière à assurer une relative étanchéité à ce niveau. Ainsi, le fluide sous pression ne peut passer entre la portion de surface externe 103 bordant l'orifice d'entrée 102 et la surface 14 du joint d'étanchéité 8 opposée au fond 6.1 et est ainsi dirigé entre la surface 9 et le fond 6.1. L'effet du fluide sur le déplacement du joint d'étanchéité 8 vers la portion de surface externe 103 est alors encore renforcé.

Le joint d'étanchéité 8 comprend un bourrelet externe annulaire 12 en saillie radiale, qui s'applique sur le flanc externe 6.2 et une collerette 13 en saillie axiale de la surface 14 opposée à la surface 9.

On notera que le diamètre du bourrelet externe 12 est supérieur au diamètre de la collerette 13.

En variante, comme représenté à la figure 6, le joint d'étanchéité 8 peut ne pas comprendre de lèvre annulaire 11.

Bien entendu, l'invention n'est pas limitée aux modes de réalisation décrits mais englobe toutes variantes entrant dans le champ de l'invention telle que définie par les revendications.

En particulier, l'élément peut être fixé par tous moyens dans le canal 101, des moyens permettant une fixation démontable ou non. En outre, les moyens de connexion de la canalisation au raccord peuvent être des moyens de connexion instantanée démontable ou non, ou des moyens de connexion non-instantanée. En outre, l'élément peut être un embout fixé à demeure à l'extrémité d'une canalisation.

Un seul passage peut être utilisé pour amener le fluide sous pression dans la gorge et le passage peut être réalisé par exemple, par un perçage s'étendant radialement depuis la gorge jusqu'à l'alésage délimité par le corps 1. On comprend que le passage permet d'amener le fluide sous pression sur la circonférence interne du joint et sur la portion de surface du joint s'étendant en regard du fond de la gorge.

Dans le deuxième mode de réalisation, le joint d'étanchéité comprend au moins deux saillies réparties de préférence de façon symétrique. Les saillies et la section du joint sont de préférence agencées de telle manière que la surface 9 soit supérieure à la surface 14, de telle manière que le différentiel de pression exercée par le fluide sur l'une et l'autre surface tende toujours à rapprocher le joint d'étanchéité vers la portion de surface externe 103.

En variante, l'élément peut avoir une structure beaucoup plus simple comme représenté à la figure 7, où le corps de l'élément est appliqué contre la surface 103 de l'organe 100. On constate que le passage 7 résulte du jeu J délimité entre le corps au voisinage du flanc interne 6.3 et la surface 103 de l'organe et comprend également la rainure 7' s'étendant dans le fond 6.1 de la gorge 6.3 pour empêcher un contact étanche du joint d'étanchéité 8 avec le fond 6.1. En l'absence de moyens pour maintenir le joint d'étanchéité 8 contre la surface 103 (surface tronconique 15 et saillies 10), le jeu J' doit définir une section de passage (celle de la rainure 7') supérieure à la section de passage définie par le jeu j' entre la surface 103 et le joint 8 en regard. Ceci permet au fluide d'appliquer le joint d'étanchéité 8 contre la surface 103 et le flanc externe 6.2.

Les bourrelets 12 et 13 sont facultatifs.

Au moins une nervure peut s'étendre en saillie du fond 6.1 pour maintenir écartée du fond 6.1, la surface 9 du joint d'étanchéité 8 en ménageant ainsi un passage pour le fluide, lui permettant d'atteindre le flanc externe 6.2.

## Revendications

1. Elément d'un circuit de transport de fluide, comprenant un corps (1) tubulaire pourvu extérieurement d'un épaulement (5) annulaire dans lequel est ménagée une gorge (6) comportant un fond (6.1) bordé par des flancs externe (6.2) et interne (6.3) pour recevoir un joint (8) annulaire d'étanchéité destiné à prendre appui contre une surface (103) bordant un orifice d'entrée (102) d'un canal (101) d'un organe (100) auquel l'élément est destiné à être raccordé, dans lequel le corps délimite au moins un passage (7) pour amener le fluide dans la gorge de manière à repousser le joint d'étanchéité contre la surface externe de la gorge et contre la surface bordant l'orifice d'entrée du canal **caractérisé en ce qu'**une portion insérable (1.1) dans le canal de l'organe s'étend en saillie de l'épaulement (5) et que le passage (7) comprend au moins une rainure s'étendant axialement sur au moins une partie de la portion insérable (1.1), du flanc interne (6.3) et du fond (6.1) de la gorge (6).

2. Elément selon la revendication 1, dans lequel le passage (7) comprend un conduit ménagé dans le corps pour déboucher sur le flanc interne (6.3) de la gorge.

3. Elément selon la revendication 2, dans lequel le conduit (7) débouche sur le fond (6.1) de la gorge (6).

4. Elément selon la revendication 3, dans lequel le conduit débouche dans le fond (6.1) de la gorge (6) par une ouverture s'étendant entre le flanc interne (6.3) et le flanc externe (6.2).

5. Elément selon la revendication 1, dans lequel le joint d'étanchéité (8) possède en regard du fond de la gorge une surface (9) pourvue d'au moins deux saillies (10) maintenant ladite surface écartée du fond (6.1) de la gorge (6).

6. Elément selon la revendication 5, dans lequel le joint d'étanchéité (8) comporte plus de deux saillies (10) réparties de façon symétrique.

7. Elément selon la revendication 1, dans lequel le joint d'étanchéité (8) comporte une lèvre annulaire (11) s'étendant à l'opposé du fond (6.1) de la gorge (6) et au voisinage du flanc interne (6.3) de celle-ci.

8. Elément selon la revendication 1, dans lequel le fond (6.1) de la gorge (6) se raccorde au flanc interne (6.3) par une surface tronconique (15).

## Patentansprüche

1. Element eines Fluidtransportkreislaufs, umfassend ein rohrförmiges Gehäuse (1), das außen mit einer ringförmigen Schulter (5) versehen ist, in der eine Nut (6) ausgebildet ist, die einen Boden (6.1) umfasst, der von einer äußeren Flanke (6.2) und einer inneren Flanke (6.3) eingefasst ist, um eine ringförmige Dichtung (8) aufzunehmen, die dazu bestimmt ist, an einer Oberfläche (103) zur Anlage zu kommen, die eine Einlassöffnung (102) eines Kanals (101) eines Organs (100) umrandet, mit dem das Element verbunden werden soll, wobei das Gehäuse mindestens einen Durchlass (7) begrenzt, um das Fluid so in die Nut zu leiten, dass der Dichtungsring gegen die Außenfläche der Nut und gegen die Oberfläche, die die Einlassöffnung des Kanals umrandet, gedrückt wird, **dadurch gekennzeichnet, dass** ein in den Kanal des Organs einführbarer Abschnitt (1.1) über die Schulter (5) hinausragt und dass der Durchlass (7) mindestens eine Rille umfasst, die sich axial auf mindestens einem Teil des einführbaren Abschnitts (1.1), der inneren Flanke (6.3) und des Bodens (6.1) der Nut (6) erstreckt.

2. Element nach Anspruch 1, wobei der Durchlass (7) eine Leitung umfasst, die in dem Gehäuse ausgebildet ist, um an der inneren Flanke (6.3) der Nut zu münden.

3. Element nach Anspruch 2, wobei die Leitung (7) am Boden (6.1) der Nut (6) mündet.

4. Element nach Anspruch 3, wobei die Leitung im Boden (6.1) der Nut (6) über eine Öffnung mündet, die sich zwischen der inneren Flanke (6.3) und der äußeren Flanke (6.2) erstreckt.

5. Element nach Anspruch 1, wobei der Dichtungsring (8) dem Boden der Nut gegenüberliegend eine Oberfläche (9) besitzt, die mit mindestens zwei Vorsprüngen (10) versehen ist, die die genannte Oberfläche zum Boden (6.1) der Nut (6) beabstandet halten.

6. Element nach Anspruch 5, wobei der Dichtungsring (8) mehr als zwei Vorsprünge (10) umfasst, die symmetrisch verteilt sind.

7. Element nach Anspruch 1, wobei der Dichtungsring (8) eine ringförmige Lippe (11) umfasst, die sich entgegengesetzt zum Boden (6.1) der Nut (6) und nahe der inneren Flanke (6.3) derselben erstreckt.

8. Element nach Anspruch 1, wobei sich der Boden (6.1) der Nut (6) über eine kegelstumpfförmige Fläche (15) an die innere Flanke (6.3) anschließt.

## Claims

1. An element of a fluid transport circuit, which element comprises a tubular body (1) externally provided with an annular shoulder (5) in which a groove (6) is provided that has an end wall (6.1) flanked by an outer side (6.2) and by an inner side (6.3) so as to receive an annular seal (8) designed to bear against a surface (103) surrounding an inlet orifice (102) of a channel (101) of a member (100) to which the element is designed to be coupled, in which the body defines at least one passage (7) for bringing the fluid into the groove in such a manner as to push the seal back against the outer surface of the groove, and against the surface surrounding the inlet orifice of the channel, said element being **characterized in that** an insertable portion (1.1) that is insertable into the channel in the member extends projecting relative to the shoulder (5and **in that** the passage (7) comprises at least one furrow extending axially over at least a fraction of the insertable portion (1.1) of the inner side (6.3) and of the end wall (6.1) of the groove (6).

2. Element according to claim 1, wherein the passage (7) comprises a duct formed in the body so as to open out onto the inner side (6.3) of the groove.

3. Element according to claim 2, wherein the duct (7) opens out onto the end wall (6.1) of the groove (6).

4. Element according to claim 3, wherein the duct opens out onto the end wall (6.1) of the groove (6) via an opening extending between the inner side (6.3) and the outer side (6.2).

5. Element according to claim 1, wherein, facing the end wall of the groove, the seal (8) has a surface (9) provided with at least two projections (10) keeping said surface spaced apart from the end wall (6.1) of the groove (6).

6. Element according to claim 5, wherein the seal (8) has more than two projections (10) distributed symmetrically.

7. Element according to claim 1, wherein the seal (8) has an annular lip (11) extending opposite from the end wall (6.1) of the groove (6) and in the vicinity of the inner side (6.3) of said groove.

8. Element according to claim 1, wherein the end wall (6.1) of the groove (6) is connected to the inner side (6.3) via a frustoconical surface (15).
